# EUROPEAN PATENT APPLICATION

(11) **EP 4 033 643 A1**
(43) Date of publication of application: **27.07.2022**
(21) Application number: 21153477.1
(22) Date of filing: 26.01.2021
(51) Int. Cl.: H02K 5/20, H02K 9/19

(54) **AN ELECTRIC MOTOR COMPRISING A COOLING SYSTEM AND A COOLING METHOD FOR COOLING AN ELECTRIC MOTOR**

(71) Applicant: Toyota Jidosha Kabushiki Kaisha, Toyota-shi, Aichi-ken 471-8571 (JP)
(72) Inventor: SCHUERMANS, Raf, 1140 Brussels (BE); ENDO, Takahito, 1140 Brussels (BE); ARLAND, Silvio, 1140 Brussels (BE)
(74) Representative: Cabinet Beau de Loménie

(57) **Abstract**

An electric motor (10) comprising:
- a rotor member (16) rotatably coupled to a rotation shaft (20) of longitudinal axis (X) and a surrounding stator member (18) comprising a first and a second opposite winding heads (18b,18c) having each inner and outer radially located sides,
- a cooling system (CS) comprising:
a cooling fluid pipe (24) arranged above the stator member and having cooling fluid projecting orifices (24a-c) for projecting cooling fluid downwardly towards the outer side (18b1) of a winding head (18b),
a rotating member (26) rotatably coupled to shaft (20) and having an outer peripheral surface (26a) arranged inwardly relative to the inner side (18b2), the rotating member (26) configured to collect on its surface (26a) cooling fluid that has flown downwardly through the winding head from its outer side to its inner side and to distribute collected cooling fluid towards the latter by centrifugal force, while the rotating member (26) rotates.

## Description

### FIELD OF THE DISCLOSURE

The present disclosure concerns an electric motor comprising a cooling system and a method for cooling an electric motor.

### BACKGROUND OF THE DISCLOSURE

As a consequence of the climate change, the automotive sector nowadays is pushing more and more towards e-mobility, in order to minimize the pollutant emissions. To achieve this goal different paths can be followed. However, as a general rule, either the car companies increase the internal combustion engine (ICE) efficiency or implement a hybrid solution or switch directly to full electric technology. Hybrid cars couple together an ICE with one or more electric motors in a way that the fuel consumption could be optimized by operating the ICE in the highest efficient region. Unlike the previous system, in the so called battery electric vehicles (BEVs) there is no ICE and the latter is substituted with an electric motor.

Given the strong market demand for these last two solutions, car manufacturers are trying to improve the efficiency of electric motors and in particular their cooling. The overheating of electric motors is one of the main reasons that can cause a drastic drop in performance and reliability, thus reducing the effective power and torque that can be extracted from the motor. Consequently, energy consumption is increased and the driving pleasure is reduced.

As mentioned above, one of the biggest problems that manufacturers have to face in the design of electric motors is their cooling. The higher the currents that are required to achieve high torque, the higher the motor temperature. Different solutions exist to reduce this effect, but most of them are expensive, complex to manufacture and not reliable.

WO 2018225877 A1 discloses an electric motor with an internal configuration that allows cooling of the motor. In particular, the motor comprises a housing in which are arranged a stator and a rotor positioned within the stator and mounted in a rotatable manner on a rotor shaft having a longitudinal axis. An impeller is connected to the rotor shaft and disposed in contact with an end of the rotor stuck. The motor further comprises an oil pipe provided with spraying holes that are distributed around the circumference of the pipe for spraying oil under pressure in all directions. The oil pipe is arranged outside the assembly composed of the stator and the rotor with the adjacent impeller, and is facing one of the two opposite ends of this assembly that are axially aligned so as to directly and simultaneously spray oil towards both the rotating impeller and the surrounding stator as well as the housing.

It has been observed that part of the oil sprayed by the oil pipe is sprayed on the impeller with an angle close to 90° with respect to the radial extension of the impeller, bounces on the latter and disperses inside the powertrain. Also, oil path interference can occur between the oil that is directly sprayed by the oil pipe against the impeller and oil sprayed backed from the impeller thanks to the centrifugal forces that take place during the rotation of the impeller. This results in an inefficient cooling system, which does not permit sufficient temperature regulation of the windings heads of the stator along the whole periphery of the motor.

Further, the impeller that is in contact with the end of the rotor stuck is large in size since it has substantially the same radial extension as that of the rotor and extends axially over a significant distance around the rotor shaft. Such an arrangement may lead to an increase in the manufacturing costs due to a larger amount of material needed for the impeller and can also introduce a very large imbalance in the motor, thereby causing noise and vibrations.

It would thus be desirable to remedy at least one of the above drawbacks.

### DISCLOSURE OF THE INVENTION

According to a purpose of the present disclosure an electric motor may be configured to improve its cooling and, in particular, to enhance its cooling efficiency.

To meet this purpose, according to the present disclosure an electric motor with a cooling system is proposed. This electric motor comprises:
- a rotor member rotatably coupled to a rotation shaft having a longitudinal axis,
- a stator member surrounding the rotor member and comprising a first and a second opposite winding heads that are spaced apart along the longitudinal axis, the first and second winding heads having each an inner side and an outer side that are both spaced apart radially relative to the longitudinal axis,
- a cooling system,
   wherein the cooling system comprises:
   one or more cooling fluid pipes arranged radially beyond the stator member relative to the longitudinal axis and having each one or more cooling fluid projecting orifices, each cooling fluid pipe being configured to project cooling fluid through one or more cooling fluid projecting orifices downwardly towards the outer side of at least one of the first and second winding heads,
   at least one rotating member rotatably coupled to the rotation shaft and extending radially relative to the longitudinal axis, the at least one rotating member having an outer peripheral surface that is arranged inwardly with respect to the inner side of the at least one of the first and second winding heads and being configured to collect on its outer peripheral surface oil that has flown downwardly through the at least one of the first and second winding heads from its outer side to its inner side and to distribute collected cooling fluid towards the latter by centrifugal force, while the at least one rotating member is being rotated about the longitudinal axis.

Thanks to the above design the cooling fluid that is projected through one or more cooling fluid projecting orifices of the cooling fluid pipe or pipes flows downwardly, by mere gravity, on the outer side of at least one of the first and second winding heads, flows radially inwardly through the windings of the corresponding winding head and reaches the radially inwardly located outer peripheral surface of the rotating member where it is temporary collected before being redirected over 360° towards the surrounding inner side of the corresponding winding head under the action of the centrifugal forces due to the rotation of the rotating member. This configuration makes it possible not only to spray with cooling fluid the outer side of the winding head and therefore to regulate its temperature (by cooling it down) but also to distribute collected cooling fluid towards the whole inner side of the winding head and therefore to regulate the temperature thereof. Therefore this cooling system provides enhanced cooling efficiency to the motor.

Also, the proposed cooling system is of particularly simple design and easy to implement in the motor in particular in the powertrain, without questioning the design of the latter.

According to further possible aspects:
- the outer peripheral surface extends circumferentially about the longitudinal axis;
- the outer peripheral surface is provided with peripheral projecting teeth that project each radially outwardly relative to the longitudinal axis, the peripheral projecting teeth being circumferentially arranged along the circumferentially-extending outer peripheral surface;
- each pair of two successive teeth defines in between an inner cavity that is configured to collect cooling fluid, all the inner cavities being circumferentially arranged along the circumferentially-extending outer peripheral surface;
- all the teeth have the same orientation when viewed in a transverse section relative to the longitudinal axis;
- the peripheral projecting teeth have each a substantial shape of a hook when viewed in a transverse section relative to the longitudinal axis;
- at least some of the hooks have a through-hole that extends from an outer face of the hook to an inner face thereof, the outer face being oriented away from the longitudinal rotation axis;
- the hooks extend each away from the at least one rotating member and end with a free edge, a recess being provided in the free edge;
- the at least one rotating member comprises a transverse wall that is configured to form an cooling fluid I barrier to limit cooling fluid I distribution in a direction away from the rotor member;
- the at least one rotating member has an overall shape of a disc;
- the at least one rotating member is facing one of the two opposite ends of the rotor member;
- the at least one rotating member is arranged at a distance from the rotor member;
- the at least one rotating member is arranged adjacent the rotor member.

A second purpose of the present disclosure is to propose a vehicle comprising an electric motor as briefly defined above

A third purpose of the present disclosure is to propose a cooling method for cooling an electric motor that comprises:
- a rotor member rotatably coupled to a rotation shaft having a longitudinal axis,
- a stator member surrounding the rotor member and comprising a first and a second opposite winding heads that are spaced apart along the longitudinal axis, the first and second winding heads having each an inner side and an outer side that are both spaced apart radially relative to the longitudinal axis.

The cooling method comprises:
- projecting cooling fluid downwardly towards the outer side of at least one of the first and second winding heads,
- collecting cooling fluid that has flown downwardly through the at least one of the first and second winding heads from its outer side to its inner side, cooling fluid being collected on an outer peripheral surface of a rotating member that is rotatably coupled to the rotation shaft,
- rotating the rotating member about the longitudinal axis to distribute collected cooling fluid towards the inner side of the at least one of the first and second winding heads by centrifugal force.

Any of the above-mentioned features, aspects and advantages described in relation with the cooling system also applies to the cooling method and will not be repeated.

### BRIEF DESCRIPTION OF THE DRAWINGS

The present invention may be better understood and its numerous other objects and advantages will become apparent to those skilled in the art by reference to the accompanying drawings wherein like reference numerals refer to like elements in the several figures and in which :
Figure 1 is a schematic representation of an electric motor according to a first embodiment of the present disclosure;
Figure 2 is a schematic representation of a possible variant configuration of the piping arrangement of Figure 1;
Figure 3 is a schematic representation of a transverse cross section illustrating the oil path of the cooling system in the electric motor of Figure 1;
Figures 4 and 5 illustrate schematic representations of possible disc configurations;
Figure 6 is an enlarged partial view of the Figure 5 disc configuration;
Figures 7A-B and 8 illustrate other possible teeth configurations;
Figure 9 is an enlarged partial view in a transverse cross section of a toothed configuration;
Figure 10 is a schematic representation of an electric motor according to a second embodiment of the present disclosure;
Figures 11A and 11B illustrate partial enlarged views of two possible disc configurations in the embodiment of Figure 10.

### DESCRIPTION OF PREFERRED EMBODIMENTS

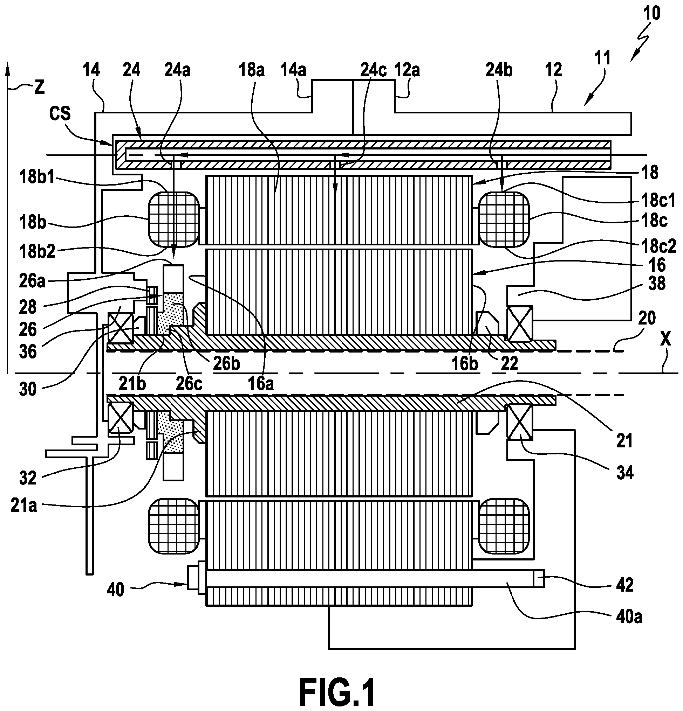

An electric motor in accordance with a first embodiment of the present disclosure is schematically illustrated in a partial longitudinal cross section on Figure 1. Such an electric motor may be embodied in a vehicle, e.g. a hybrid electric vehicle or a BEV.

The electric motor 10 comprises a cover 11 which may here be formed by two half-covers 12, 14 joined together, e.g. along two respective peripheral flanges 12a, 14a of these covers, for example through conventional fixing means.

The half-cover 12 may be a front housing cover and the half-cover 14 may be a rear housing cover. The two half-covers define conjointly an internal housing in which are located the functional components of the electric motor such as a rotor member 16 and a stator member 18 that functionally cooperate together in a conventional manner.

The rotor member 16 comprises a rotor core that is rotatably coupled to a rotation shaft 20 illustrated in dashed lines, e.g. through a rotor hub 21, extending along a longitudinal axis X that is here in a horizontal position. In the configuration of Figure 1 the rotor core is maintained in an axial position between a peripheral flange 21a extending radially outwardly from the rotor hub 21 and an axially spaced apart maintaining member 22 mounted around the rotor hub 21, such as a nut.

The stator member 18 surrounds the rotor member 16 which means that the stator member is radially located farther from the longitudinal axis X than the rotor member. Each of the rotor and stator members 16, 18 extends axially parallel to each other between two opposite ends that are aligned along the axial extension direction (parallel to axis X).

In particular, the stator member 18 may comprise a stator core 18a including windings inside. The stator core 18a may extend circumferentially around the rotor member 16.

The stator member 18 may further comprise a first winding head 18a and a second opposite winding head 18b that are spaced apart axially along the longitudinal axis, on either opposite end of the middle stator core 18a. Each of the first and second winding heads 18b, 18c has an outer side 18b1, 18c1 and an inner side 18b2, 18c2 that are both spaced apart radially relative to the longitudinal axis X. In other words, the outer side 18b1, 18c1 of each winding head 18b, 18c is outwardly located in a radial position that is farther from the longitudinal axis X than the radial position of the inwardly located inner side 18b2, 18c2. In the configuration of Figure 1 both first and second winding heads 18b, 18c extend axially farther from the rotor member 16 so that they each protrude axially beyond the rotor member.

The electric motor 10 further comprises a cooling system CS that comprises one or more cooling fluid pipes 24 located outwardly (i.e. radially beyond) from the stator member 18 relative to the rotor member 16 and the inwardly located longitudinal axis X and having each one or more cooling fluid projecting orifices or holes 24a, 24b and 24c. Only three orifices have been represented here for pipe 24 in each section thereof (the two end sections and the central section) although a greater number can be envisaged in each section of the pipe. In a variant embodiment not represented in the drawings, the orifice or orifices 24c located above the stator core 18a can be suppressed. In another variant embodiment not represented in the drawings, only one of the extreme orifices 24a and 24b in the two end sections respectively is present, possibly or not with the central orifice or orifices. The cooling fluid may be oil, water, etc. In the following, cooling fluid is preferably oil but the following description equally applies to any other cooling fluid. To be noted that when water is used one or more seal parts or elements may be required so that water does not reach the bearings. In contrast, when oil is used, sealing is not necessary since oil does not interfere with the lubrication of the bearings. An oil pump (not represented) is used to convey oil through the one or more oil pipes 24 and to its projecting orifices.

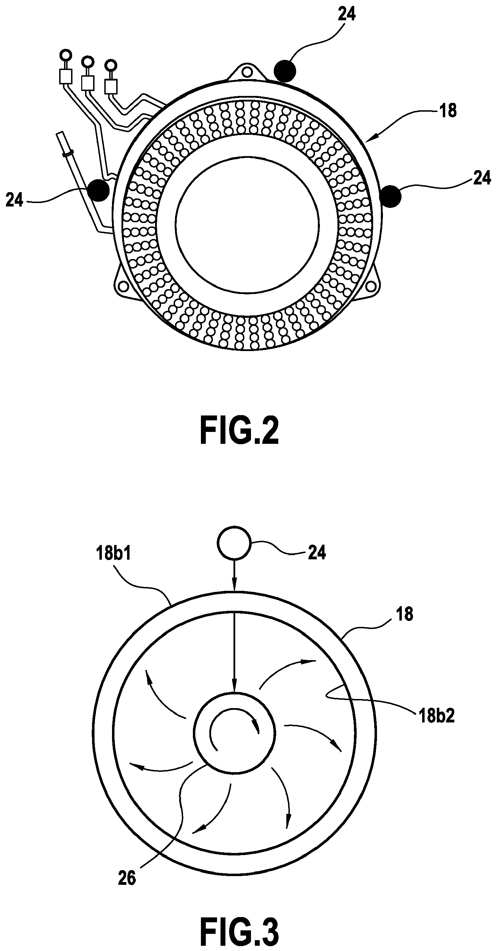

The one or more oil pipes 24 are each located above the stator member 18 at a vertical position or height along a vertical axis Z so that oil flowing from each oil pipe can flow downwardly out of gravity. In the present configuration a single oil pipe is represented above the stator member, preferentially above its highest point or z altitude. When several oil pipes 24 are envisaged (for an even higher cooling efficiency) they can be distributed around an angular upper segment of the stator member as illustrated in the transverse cross section of Figure 2 where they are located in the upper 180° segment so that oil can flow out of each oil pipe with at least a vertical component. The number of oil pipes represented is only a possible example and may differ depending on the configurations. When the cooling system comprises several oil pipes 24 they can all have the same configuration with the same number and position for the oil projecting orifices or, alternatively, different configurations according to their position relative to the stator member 18. An oil pump (not represented) is used to convey oil through the one or more oil pipes 24 and to its projecting orifices. There is no need of high pressure since the cooling system is based on the gravity phenomenon to reach all the points of the stator member. The pressure of the oil has to be sufficient to transport oil through the one or more oil pipes 24 and all through all the orifices of each pipe where it can be expelled and then flows down by gravity. The oil pressure that is needed is therefore reduced compared with the prior art methods and systems.

In the present configuration the oil pipe 24 may extend axially along the longitudinal axis X, parallel to the stator member 18 and may protrude axially beyond the winding heads 18b and 18c. Such a configuration may enable positioning and fixation of the pipe within the motor housing, e.g. by engagement in an internal recess or other internal configuration of the cover, at least through the pipe end section containing the orifice 24a. Overall, the distance between the oil orifice 24a and the underside winding head 18b should preferably not be too small to enable an efficient delivery of the oil. Otherwise, in case of a too small distance the oil exiting the orifice will not be sprayed efficiently and the below rotating member (which will be described farther) will not receive enough oil. Further, depending on the material of the oil pipe, it might not be desirable to have the oil orifice too close from the winding head when securing the distance for electrical insulation. The greater the distance between the position of the orifice and the winding head, the larger the size of the oil pipe. The dimensions of the oil orifice are preferably a balance between the amount of oil supply to each section (e.g. 24a, 24b and 24c) and the trajectory of the oil.

The cooling system CS further comprises at least one rotating member 26 that is inwardly located with respect to the stator member 18.

The at least one rotating member 26 is rotatably coupled to the rotation shaft 20, e.g. through rotor hub 21, so as to be driven into rotation along with the rotor member 16. In the present configuration a single rotating member 26 is inwardly located relative to the first winding head 18b although another similar or identical rotating member may be inwardly located relative to the second opposite winding head 18c in a variant embodiment. In the following only one rotating member is considered but it also applies to a configuration with two rotating members inwardly located relative to the first and second winding heads 18b and 18c respectively. Both rotating members may be arranged symmetrically with respect to the rotor member 16.

As illustrated in Figure 1, the rotating member 26 may extend radially relative to the longitudinal axis X so as to project outwardly from the rotation shaft 20 (i.e. away from the axis X), more particularly from rotor hub 21, and terminate with an outer peripheral surface 26a. The outer peripheral surface 26a is arranged inwardly with respect to the inner side 18b2 of the first winding head 18b (put it another way, the inner side 18b2 surrounds the outer peripheral surface 26a) and, more particularly, may extend circumferentially about the rotation shaft 20 (and rotor hub 21), i.e. longitudinal axis X. As illustrated in Figure 1, the rotating member 26 extends radially relative to the longitudinal axis X over a radial distance that is less than the radial extension of the rotor member 16. Depending on the rotating member material, it might not be desirable to keep the distance between the outer peripheral surface 26a and the first winding head 18b too small to ensure a minimum distance for electrical insulation.

In an general manner, oil is projected downwardly through the orifice or orifices 24a (several orifices may be provided above the first winding head 18b on a same pipe diameter and/or along a length of the pipe) towards the below located outer side 18b1 of the first winding head 18b and flows downwardly through the latter (it flows through the adjacent windings) until reaching the inner side 18b2 thereof, as illustrated by the rectilinear arrows in Figure 1. In this drawing oil may also flow out of the other represented orifices 24b and 24c in the other pipe sections but these orifices could alternatively be omitted. The oil flow that reaches the inner side 18b2 continues to progress downwardly until falling onto the below outer peripheral surface 26a of the rotating member 26 that is being rotated about the axis X. As the outer peripheral surface 26a rotates, the downwardly-oriented oil flow that attains and is collected by the latter is distributed over 360°, i.e. in all directions, by virtue of centrifugal force, as very schematically illustrated in the transverse cross section of Figure 3. Thus, the distributed oil impinges upon the whole inner side 18b1 of the first winding head 18b, thereby enabling to cool it down homogeneously and efficiently.

It is to be noted that once the oil comes into contact with the different components of the stator member (depending on the oil orifices location) and cools them, it flows by gravity at the base or lower part of the motor housing where it is recovered and sent back to a heat exchanger (not represented in the drawings) to be cooled before being brought to the one or more oil pipes by the oil pump and the cycle is repeated.

As more particularly represented in this embodiment, the rotating member 26 may be located at a distance from one of the two opposite axial ends 16a, 16b of the rotor member 16 (e.g. facing this end) and may be mounted around the rotor hub 21, in an external stepped recess 21b of the latter, and positioned against a resolver 28 of the rotor member 16. A fixing member 30 (e.g. a nut) of the resolver 28 may be mounted around the rotor hub 21 for maintaining the resolver in its axial position. The rotating member 26 may thus be axially maintained in position on the rotor hub 21 thanks to this arrangement although alternative arrangements may be envisaged. The rotating member 26 may have a configuration adapted for being thus mounted on the rotor hub 21. In this respect, an inner part of the rotating member 26 that is radially disposed closer to the hub 21 than the outer peripheral surface 26a may therefore be shaped appropriately to cooperate with the locally configured hub 21. In the present configuration the inner part of the rotating member 26 may include a shoulder to engage with the stepped recess 21b of the rotor hub 21 as very schematically represented on Figure 1. By positioning the rotation member between the resolver and the rotor hub no unwanted unbalance is introduced and a robust mechanical fixing is thus obtained.

It is to be noted that bearings 32 and 34 may respectively be mounted around the two opposite ends of the rotor hub 21, and more particularly between the latter and internal configurations or protruding elements 36 and 38 of the half-covers so as to be fixed in position there between, thereby enabling efficient and reliable rotation of the rotor hub 21. Further, at least one fixing member 40, e.g. a bolt axially traversing the stator core 18a and engaging through its projecting end 40a into an internal configuration or adapted recess 42 of the half-cover 12, may be used to fix the stator member 18 in position within the motor housing. In the present configuration three similar fixing members may be used although a different number may alternatively be used. One or more alternative fixing members may be envisaged to maintain the stator member in a fixed position inside the motor housing.

As more particularly represented in the Figure 1 embodiment, the rotating member 26 may substantially take the overall shape of a disc, in particular when viewed in a transverse cross section, even though it may have a different profile in an axial cross section as in Figure 1.

The disc 26 may comprise a main annular part 26b that substantially extends in a radial direction between an inner portion proximate the rotor hub 21 and an outer distal portion that terminates with the outer peripheral surface 26a. The disc 26 may also comprise the inner part 26c as described above that extends both axially and radially relative to the main part 26b so as to form an annular shaped-shoulder that is adapted to cooperate with the locally configured rotor hub 21. Other configurations may alternatively be envisaged for the inner part 26c of the disc 26, depending on the local configuration of the rotor hub 21.

Further, in the present embodiment, the outer peripheral surface 26a may be provided with peripheral projecting teeth that project each radially outwardly relative to the body of the disc 26, i.e. here the main part 26b.

The peripheral projecting teeth may be circumferentially arranged along the circumferentially-extending outer peripheral surface 26a, and preferably evenly distributed (e.g. equally spaced) over the circumference.

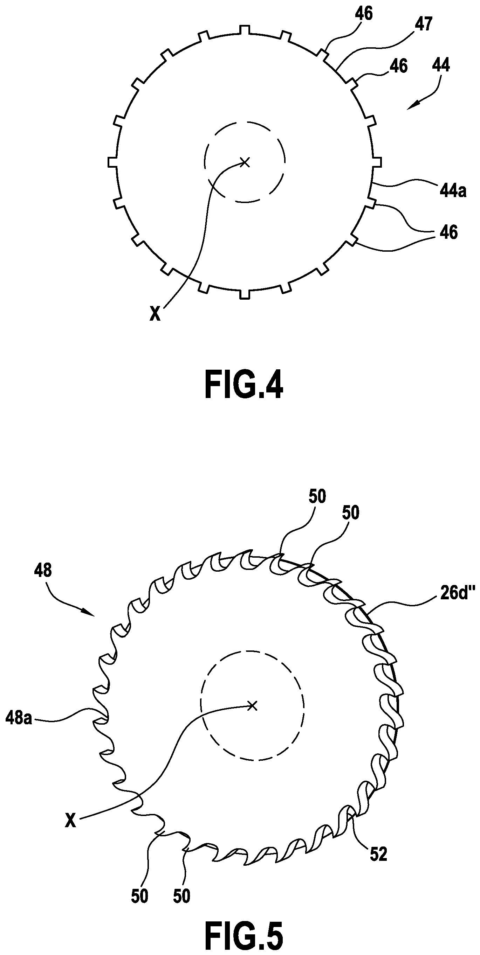

Figures 4 and 5 are schematic representations of exemplary embodiments of substantially disc-shaped rotating members with such peripheral teeth having different configurations in transverse cross sections relative to the longitudinal axis X. Each disc has been represented as a solid material body for illustrative purpose only since in the Figure 1 embodiment it is composed of a main annular part and an inner annular part. The dashed circles illustrate in both figures that an inner annular part is to be provided for mounting on the rotor hub 21.

In the disc 44 of Figure 4 the teeth 46 are regularly spaced (ex: equally spaced) around the outer peripheral surface 44a and project outwardly therefrom, e.g. in the shape of crenels or square- or rectangular-shaped projections in transverse cross section. For example, the teeth 46 are all oriented along a radius of the disc with no inclination clockwise or counter clockwise.

In the disc 48 of Figure 5 the teeth 50 are regularly spaced (ex: equally spaced) around the outer peripheral surface 48a and project outwardly therefrom with a slight orientation in a clockwise direction in transverse cross section. The teeth 50 are also curved-shaped and thinner than crenel-shaped teeth 46 in transverse cross section.

Whatever the shape or contour of the teeth in transverse cross section, each pair of two successive teeth along the circumference of the disc defines in between an inner cavity or gap (47 or 52) which is more or less open to outside depending on the orientation of the teeth (radial, clockwise or counter clockwise).

In a general manner, all the inner cavities or gaps existing between two successive teeth, taken by pairs, are circumferentially arranged along the circumferentially-extending outer peripheral surface of the disc.

These inner spaces defined between two successive teeth serve to receive or collect/capture the downwardly oriented oil flow (as the one represented in Figures 1 and 3 and that comes from orifice 24a) when they pass below the latter and to bring the received or collected/captured oil farther on the rotating path of the disc, i.e. to different 360°-spread locations where each inner space travels as the disc rotates, and distribute the received or collected/captured oil away from these locations towards the inner side 18b2 of the first winding head 18b due to centrifugal forces generated by the rotation motion as illustrated in Figure 3.

As represented in Figure 3, the received or collected/captured oil is distributed or redirected from almost all the inner spaces that travel along the rotary trajectory as the disc rotates and distributed oil takes the form of a swirling effect by virtue of the rotation motion. To be noted that the cavities (created in the rotating member) where oil can be trapped or held make it possible to bring and distribute significant quantities of oil all around the rotating member in the course of its rotation.

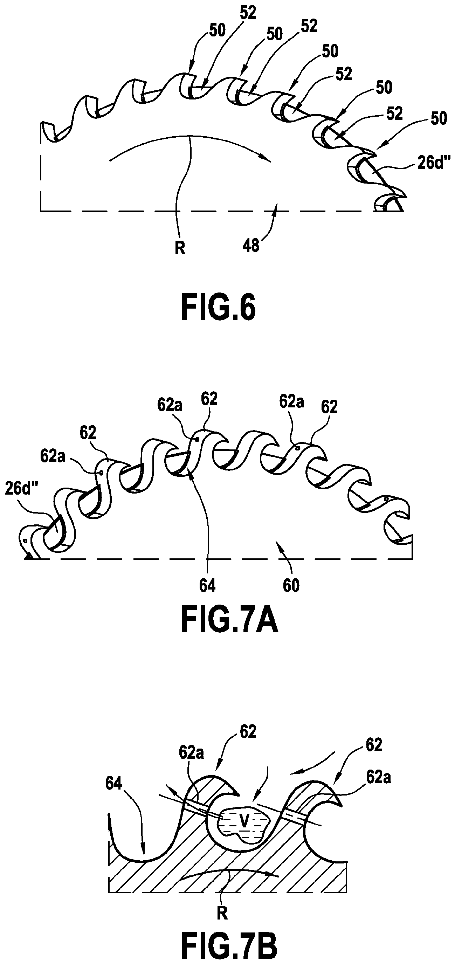

Figure 6 illustrates a partial enlarged view of the Figure 5 disc 48 (upper part) showing an exemplary embodiment of the inner cavities or spaces 52 where oil flowing down can be trapped between two successive teeth 50 before being moved along the rotary path (in the rotation direction indicated by the arrow R) and distributed or redirected at least partially outwardly. The inclination of the teeth 50 to the right, i.e. in the clockwise rotation direction of the disc, makes it possible to prevent, in conjunction with the disc rotation, oil that is received in a cavity 52 which is just under the vertical downward oil flow to bounce upwardly against the incoming oil flow. In contrast, the cavity 52 that is located between two successive teeth 50 and receives oil at a time is immediately moved to the right, in a different angular position due to the disc rotation and the inclination of the right-hand side teeth, in particular the tooth that is located on the left side of the concerned cavity, make it possible to immediately deviate to the right any bouncing oil. Thus, oil interference between the oil flowing down on the disc and the oil that is redirected outwardly towards the winding head can be avoided. To be noted that this anti-bouncing effect may also be achieved through teeth 46 of Figure 4 due to the rotation motion of the disc 44. However, the right-hand side inclination of teeth 50 makes also possible to better spread or distribute the received or captured oil against the whole inner side 18b2 due to the guiding effect of the inclined teeth in conjunction with the rotation motion, which is not the case with straight teeth 46.

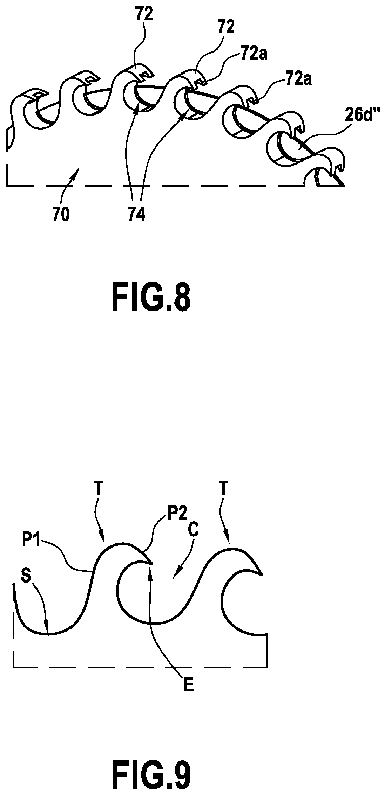

In variant embodiments illustrated in Figures 7A-B and 8, the teeth are hook-shaped. As schematically and partially represented in Figure 9, it means that each tooth T projects outwardly from the outer peripheral surface S of the disc through a first projecting part P1 that extends both radially and angularly away from the centre of the disc and then through a second projecting part P2 that extends from the junction with the first part (the junction is located at the apex of the tooth) downwardly towards the space or inner cavity C between the two successive teeth so as to form the substantial shape of a hook. The second part P2 terminates with an end that forms a free edge E. This free edge may be more or less oriented towards the other tooth T and/or downwardly towards the cavity C and the centre of the disc so as to more or less close the inner cavity C, being understood that the latter must be open enough to enable oil redirection/distribution. The first and the second parts P1 and P2 of each tooth may be substantially curved as represented in Figure 9. The hook shape makes it possible to guide the oil that is flowing down from the upper inner side of the winding end (see Figures 1 and 3) towards the inner of cavities C, thanks to the curved parts P1 and P2 (oil that is flowing down may attain the first part P1 or the downward slope of the second part P2 and thus may be directed either towards the cavity C on the left side of first part P1 or the next cavity C on the right side of second part P2 in Figure 9), compared with the teeth profile of Figure 5 where the teeth terminate each at their apex. Capture or collection of the oil is therefore favoured through the hook-shaped teeth.

As represented in Figure 7A, at least some of the hooks 62 of the disc 60, e.g. every two hooks, may have a through-hole 62a that extends from an outer face of the hook to an inner face thereof that opens out onto an inner cavity 64. The outer face is oriented away from the disc and, therefore, from the longitudinal rotation axis of the disc. In a variant embodiment not represented here, all the hooks are provided with a through-hole.

The through-hole 62a may be located in the portion of the first part P1 of the tooth (Fig. 9) that is proximate its outermost radially located portion, i.e. close to the junction (apex) with the second part P2. However, other arrangements may be provided to the extent that the through-hole 62a makes it possible to have an oil flow communication between the cavity holding oil and the outside.

Oil that is flowing down from the upper inner side of the winding end as represented in Figures 1 and 3 reaches each cavity 64 that is passing below as the disc rotates and a fraction of the oil that is held/captured in each cavity can penetrate the through-hole 62a under the action of centrifugal forces and exit its opposite outwardly-located opening end to be distributed outwardly as shown in the enlarged view of Figure 7B. Oil is therefore gradually discharged outwardly through hole 62a as the disc rotates. Oil can therefore be distributed or delivered to the inner side of the winding head 18b in the range of the angle rotated until all the oil in the cavity is discharged. Therefore these through-holes allow easier oil distribution towards the inner side of the winding end. To be noted that oil held/captured in the cavities can also escape therefrom through the open sides of the cavities, i.e. in directions perpendicular to the disc.

As represented in Figure 8, the hooks 72 extend each away from the disc 70 and end with a free edge (as free edge E of Figure 9) in which a recess 72a is provided so as to allow further evacuation of the oil from each inner cavity 74 where it is held/captured. The recesses may be more or less deep inside the free edge and more or less wide (along an axial direction), depending of the magnitude of the effect that is wished. As for the through-holes of Figures 7A-B, oil that is contained in each cavity 74 is gradually discharged outwardly through recesses 72a by centrifugal forces as the disc rotates. Oil can also escape sideways and outwardly away from the hooks as for Figures 7A-B through-holes.

It is to be noted that other non-represented possible teeth configurations of a rotating member can be envisaged with or without a hook shape profile, possibly combining the through-hole and the recessed free edge (either on the same tooth or one tooth with a through-hole and the following with a recess) or the through hole with the teeth configuration of Figures 5 and 6 in order to enhance the distribution effect.

Overall, a rotating member provided with teeth configurations in whatever form has to be thick enough (dimension along an axial direction) so that the volume of oil held/captured in each cavity between two teeth is sufficient to be distributed over the whole circumference. If the thickness is too small (thin rotating member), then the oil held/captured in each cavity will only permit to be distributed over a limited range of angles (angular segment). By contrast, the thickness should not be too large so as not to interfere with the surrounding elements or parts (e.g. resolvers, bearings etc.).

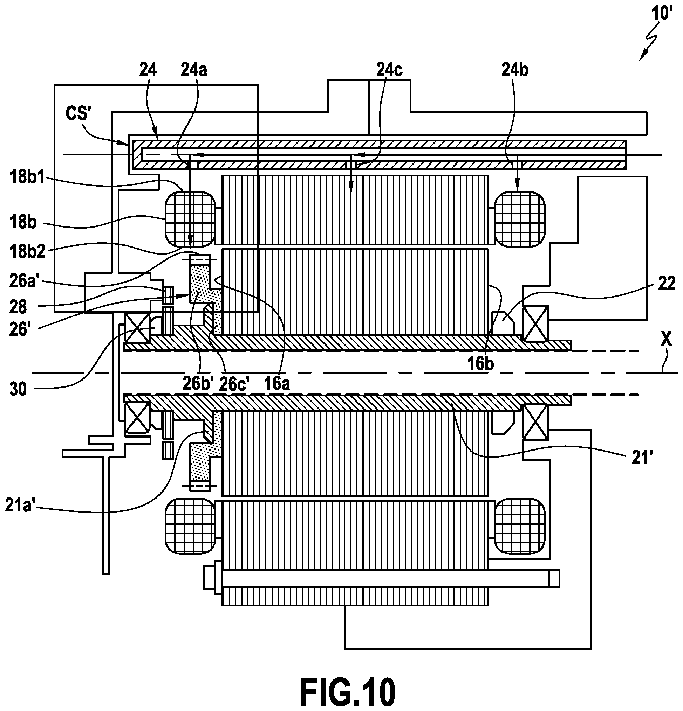

A second embodiment of an electric motor 10' of the present disclosure is schematically illustrated in a partial longitudinal cross section on Figure 10 that is very similar to Figure 1. Like numeral references are taken over and only the elements that are modified will be affected by the sign'.

In the present configuration, only the rotation member 26' of the cooling system CS' has been modified, the one or more oil pipes 24 being unchanged.

The rotation member 26' is arranged adjacent the rotor member 16, in particular against the facing end 16a thereof. More particularly, rotation member 26' is located between the rotor hub 21' and the rotor member 16 (rotor stuck). The rotation member 26' is internally shaped so as to be mounted between the rotor facing end 16a and a peripheral flange 21a' of the rotor hub 21' (the peripheral flange 21a' is thinner than peripheral flange 21a for accommodating rotation member 26'). Thus, rotation member 26' has an inner part 26c' that forms a shoulder with respect to the main outer part 26b' so that the latter be located below the inner side 18b2 of the winding head 18b whereas the inner part 26c' is axially shifted towards the rotor member. This mounting arrangement of rotation member 26' is strong, reliable and easy to implement. All the other aspects and advantages described in relation with the previous drawings still apply here.

The rotating members of Figures 1 and 10 may be made partially of plastic (e.g. fiber glass reinforced polymeric material) except for an inner part thereof that is connected to the cylindrical portion of the rotor hub. Such a fixation provides strong mechanical connection. The inner part may be made of steel for example.

In a variant embodiment not illustrated in the drawings the rotating member may be mounted differently on the rotor hub and, for example, may be press fitted inside two grooves (ex: axial ones) provided on the rotor hub. This could apply to a plastic made rotating member. According to another variant embodiment not illustrated in the drawings, the rotating member may be press fitted onto a cylindrical portion of the rotor hub, e.g. between the resolver and the rotor member. Such a rotating member could be made partially of plastic except for an inner part thereof that is connected to the cylindrical portion of the rotor hub. Such a fixation provides strong mechanical connection.

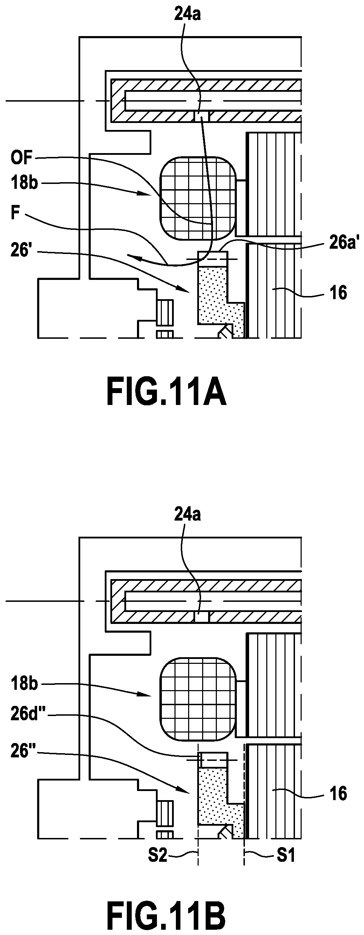

Figures 11A and 11B illustrate a further aspect that is described based on the Figure 11 rotating member configuration but may apply to the previously described embodiment and variants.

Figure 11A represents a possible path for at least a fraction F of oil flow in a longitudinal direction when oil flows downwardly (see vertical oil flow arrow OF) and reaches the outer peripheral surface 26a' with the circumferentially-toothed arrangement of rotating member 26'. Such possible diverted oil path is unwanted and reduces the cooling efficiency of the cooling system.

In order to avoid such a situation, a transverse wall 26d" is provided in the rotating member 26" (Figure 11B) and extends in a transverse section of the rotating member 26". Such a transverse wall forms an oil barrier to prevent the oil flow from deviating in a direction away from the rotor member 16. The above-described oil fraction F (oil distribution) is therefore prevented from occurring or at least dramatically limited.

As represented in Figure 11B, the rotating member 26" may extend axially between a first transverse section S1 that is facing the rotor member 16 and a second opposite transverse section S2 that is away from the rotor member. In the present configuration, the oil barrier wall 26d" is located in the second opposite transverse section S2 and it is also represented in the background of Figures 5 to 8 (however, such an oil barrier wall can be omitted from these embodiments and variants). The radial extension of the oil barrier wall 26d" is not necessarily the same as that of the disc with its teeth and, for example, the teeth may project beyond the outermost radial extension or circumference of wall 26d". In a general manner, the wall 26d" extends radially over a distance that is sufficient for the inner cavities between the teeth of the rotating member to be at least partly closed by a portion of this wall on this side of the cavities. Put it another way, the outer circumference of the barrier wall is sufficiently large so that the oil volume in the cavities does not leak out on this side of the cavities (on the left in Figure 11B). However, in a variant not represented in the drawings, the wall 26d" may extend to the same height as the apex of the teeth in order to maximize the barrier effect. It is to be noticed that the oil barrier may be provided as a separate part from the rotating member and thus has to be mounted thereon through mounting means or parts. Alternatively, the oil barrier may be made integral with the rotating member (e.g. through a manufacturing method such as resin injection), which makes it possible to reduce the weight of the overall oil barrier-equipped rotating member.

The electric motor according to the present disclosure, whatever the embodiments and variants, may further include a processing device, for example a general-purpose or special-purpose processor, which is programmed with instructions to perform the steps of the present disclosure and, in particular, the steps of the cooling method for cooling the electric motor. Alternatively, the processing device may be located outside the electric motor, for example in other parts of a vehicle embodying the electric motor. Alternatively, the steps of the present disclosure can be performed by specific hardware components that contain hardwired logic for performing the steps, or by any combination of programmed computer components and custom hardware components.

The cooling system and method according to the present disclosure make it possible to bring cooling oil, or more generally cooling fluid, all around the inner side(s) of the winding head(s) (over 360°), which largely improves cooling efficiency over prior art systems and methods. This may result in an increased power density for the electric motor. Cooling may thus be obtained in a more homogeneous way than previously. By way of example, when oil is used as a cooling fluid, it may be at a relatively low temperature since it may be oil that has been cooled down by flowing through a heat exchanger with outside (e.g. heat exchange with the cooling water of a radiator) after it has been used as lubricant for gear meshing and bearings.

To be noted that the cooling system and method according to the present disclosure also make it possible, in certain embodiments and variants, to directly cool the outer side(s) of the winding head(s) (external diameters of the winding heads as well as the stator stack through oil projecting or spraying orifices in all the sections of the oil pipe(s)) with part of the cooling oil or coolant, the other part being conveyed to the rotating member and dedicated to cooling the inner side(s) of the winding head(s).

The cooling system may be easily integrated in the powertrain without questioning the whole design of the latter since, in particular, it is functionally independent from the clamping of the electric motor in the housing. Moreover, as the cooling system is accommodated within the stator member inner diameter, it therefore does not increase the overall bulkiness of the motor. The cooling system may be produced at a relatively low cost, in particular when using plastic at least in part for manufacturing the rotating member. Using plastic (e.g. polymeric materials) in the cooling system, in particular for the rotating member(s) provide a lightweight solution. Further, designing the rotating member(s) with relatively small dimensions makes it possible to reduce and even avoid unbalancing forces that may have been introduced by the rotating member. When both lightweight and small dimensions aspects can be achieved, unwanted unbalance in the motor can be dramatically reduced, even avoided. Thus, even at high motor speeds, no additional stresses and vibrations are generated.

## Claims

1. An electric motor (10) comprising:
- a rotor member (16) rotatably coupled to a rotation shaft (20) having a longitudinal axis (X),
- a stator member (18) surrounding the rotor member and comprising a first and a second opposite winding heads (18b,18c) that are spaced apart along the longitudinal axis, the first and second winding heads (18b, 18c) having each an inner side (18b2, 18c2) and an outer side (18b1, 18c1) that are both spaced apart radially relative to the longitudinal axis,
- a cooling system (CS),
wherein the cooling system comprises:
• one or more cooling fluid pipes (24) arranged radially beyond the stator member relative to the longitudinal axis and having each one or more cooling fluid projecting orifices (24a-c), each cooling fluid pipe (24) being configured to project cooling fluid through one or more cooling fluid projecting orifices downwardly towards the outer side (18b1, 18c1) of at least one of the first and second winding heads (18b,18c),
• at least one rotating member (26) rotatably coupled to the rotation shaft (20) and extending radially relative to the longitudinal axis, the at least one rotating member (26) having an outer peripheral surface (26a) that is arranged inwardly with respect to the inner side (18b2, 18c2) of the at least one of the first and second winding heads (18b,18c) and being configured to collect on its outer peripheral surface cooling fluid that has flown downwardly through the at least one of the first and second winding heads from its outer side to its inner side and to distribute collected cooling fluid towards the latter by centrifugal force, while the at least one rotating member (26) is being rotated about the longitudinal axis.

2. The electric motor according to claim 1, wherein the outer peripheral surface (26a) extends circumferentially about the longitudinal axis.

3. The electric motor according to the preceding claim, wherein the outer peripheral surface (26a) is provided with peripheral projecting teeth (46;50; 62; 72; T) that project each radially outwardly relative to the longitudinal axis (X), the peripheral projecting teeth being circumferentially arranged along the circumferentially-extending outer peripheral surface.

4. The electric motor according to the preceding claim, wherein each pair of two successive teeth (46; 50; 62; 72; T) defines in between an inner cavity (47; 52; 64; 74; C) that is configured to collect cooling fluid, all the inner cavities being circumferentially arranged along the circumferentially-extending outer peripheral surface.

5. The electric motor according to the preceding claim, wherein all the teeth have the same orientation when viewed in a transverse section relative to the longitudinal axis.

6. The electric motor according to any one of claims 3 to 5, wherein the peripheral projecting teeth (50; 62; 72; T) have each a substantial shape of a hook when viewed in a transverse section relative to the longitudinal axis.

7. The electric motor according to claim 6, wherein at least some of the hooks (62) have a through-hole (62a) that extends from an outer face of the hook to an inner face thereof, the outer face being oriented away from the longitudinal rotation axis.

8. The electric motor according to claim 6 or 7, wherein the hooks (72) extend each away from the at least one rotating member (26) and end with a free edge, a recess (72a) being provided in the free edge.

9. The electric motor according to any one of claims 1 to 8, wherein the at least one rotating member (26") comprises a transverse wall (26d") that is configured to form a cooling fluid barrier to limit cooling fluid distribution in a direction away from the rotor member (16).

10. The electric motor according to any preceding claim, wherein the at least one rotating member (26) has an overall shape of a disc.

11. The electric motor according to any preceding claim, wherein the at least one rotating member (26) is facing one of the two opposite ends (16a, 16b) of the rotor member (16).

12. The electric motor according to any preceding claim, wherein the at least one rotating member (26) is arranged at a distance from the rotor member (16).

13. The electric motor according to any one of claims 1 to 11, wherein the at least one rotating member (26'; 26") is arranged adjacent the rotor member (16).

14. A vehicle comprising an electric motor according to any preceding claim.

15. A method for cooling an electric motor (10'), the electric motor comprising:
- a rotor member (16) rotatably coupled to a rotation shaft (20) having a longitudinal axis (X),
- a stator member (18) surrounding the rotor member and comprising a first and a second opposite winding heads (18b, 18c) that are spaced apart along the longitudinal axis, the first and second winding heads (18b, 18c) having each an inner side (18b2, 18c2) and an outer side (18b1, 18c1) that are both spaced apart radially relative to the longitudinal axis,
wherein the method comprises:
- projecting cooling fluid downwardly towards the outer side (18b1, 18c1) of at least one of the first and second winding heads (18b, 18c),
- collecting cooling fluid that has flown downwardly through the at least one of the first and second winding heads (18b, 18c) from its outer side to its inner side, cooling fluid being collected on an outer peripheral surface (26a) of a rotating member (26) that is rotatably coupled to the rotation shaft,
- rotating the rotating member (26) about the longitudinal axis to distribute collected cooling fluid towards the inner side (18b2, 18c2) of the at least one of the first and second winding heads (18b, 18c) by centrifugal force.
